# EUROPEAN PATENT SPECIFICATION

(11) **EP 4 264 057 B1**
(45) Date of publication and mention of the grant of the patent: **08.04.2026**
(21) Application number: 21831330.2
(22) Date of filing: 14.12.2021
(51) Int. Cl.: F04D 19/04, F04D 29/056, G01M 13/04, F04D 27/00

(54) **BEARING WEAR MONITORING**
LAGERVERSCHLEISSÜBERWACHUNG
SURVEILLANCE D'USURE DE PALIER

(30) Priority: 16.12.2020 GB 202019847
(43) Date of publication of application: 25.10.2023
(73) Proprietor: Edwards Limited, Burgess Hill, Sussex RH15 9TW (GB)
(72) Inventor: HAYLOCK, James Alexander, Burgess Hill Sussex RH15 9TW (GB); MILES, Christopher, Burgess Hill Sussex RH15 9TW (GB); PATEY, Alexander James, Burgess Hill Sussex RH15 9TW (GB)
(74) Representative: Totman, Clare Elizabeth
(86) International application number: PCT/GB2021/053283
(87) International publication number: WO 2022/129888

(56) References cited:
- EP-A1- 3 832 141
- WO-A1-2016/115591
- WO-A1-2018/208176
- DE-A1- 102008 047 026
- JP-A- H03 115 796
- US-A- 5 599 112
- US-A- 5 621 159
- US-A1- 2021 072 272

## Description

### FIELD OF THE INVENTION

The field of the invention relates to bearing wear monitoring apparatus; a bearing wear monitoring method and a pump apparatus comprising a bearing wear monitoring apparatus. More particularly, but not exclusively, the present disclosure relates to bearing wear monitoring apparatus for monitoring operation of a vacuum pump, and to a vacuum pump apparatus comprising a bearing wear monitoring apparatus.

### BACKGROUND

A pump system will typically comprise: a pump including a stator and a rotating assembly part; an inverter and a pump controller. Pumps of interest may include a vacuum pump, such as a turbo pump, or a multi-stage positive displacement pump, for pumping gas from a semiconductor tool or the like. However, it will be appreciated that the issues associated with operation of a pump are not limited to a particular type of pump mechanism. As described above, a pump typically comprises: an electric motor having a stator and a rotating assembly. The rotating assembly may comprise a motor rotor, a shaft and a pump impeller. The rotor will typically be mounted such that bearings ensure smooth rotation of the shaft associated with the rotor. Bearing wear, for example, from spalling of associated raceways or damage to a bearing cage, can cause an increase in rolling frictional forces associated with the bearing, and may consequently impact upon operation of the pump and pump system.

At least in certain embodiments, the present invention seeks to overcome or ameliorate at least some of the limitations associated with operation of a pump experiencing bearing wear.

JPH03115796 describes a magnetic bearing protection device which monitors the time taken for a rotor of a turbomolecular pump to decelerate to a preset rotational speed, this time being indicative of wear.

US5599112 describes monitoring the load upon a drive motor to indicate axial bearing wear.

DE102008047026 discloses a device that measures deceleration to determine bearing wear.

US5621159) discloses a fan test system, where the power to the fan is cut and the deceleration measured to determine fan bearing friction.

### SUMMARY

A first aspect provides bearing wear monitoring apparatus configured to monitor bearings of a vacuum pump having an electric motor comprising a rotating assembly, the monitoring apparatus comprising: input reception circuitry configured to receive signals indicative of characteristics of rotating assembly rotation, the signals indicative of characteristics of rotating assembly rotation comprising a signal indicative of rotational speed and a signal indicative of motor power; and bearing wear monitoring circuitry configured to analyse the characteristics of rotating assembly rotation over time and identify one or more signal feature of each signal which is indicative of bearing wear.

The first aspect recognises that typically a pump motor is configured to maintain a target rotation speed. The rotation speed of rotating components forming a rotating assembly in a pump motor arrangement will be affected by torque on a motor rotor shaft. As a result, reaching the target speed will depend upon shaft torque. Bearing wear produces variation in rolling friction of the bearing and therefore is one cause of variation in shaft torque. Other factors may also cause variation in shaft torque, for example, in relation to operation of a motor in a vacuum pump system, potential causes include: changing gas load, thermal effects, back pressure changes, changes in modes of operation of a pump motor and/or varying pump load.

The first aspect particularly recognises that variations in shaft torque can be indirectly monitored, measured and/or determined by appropriate measurement or monitoring of operational characteristics of a pump motor. The first aspect further recognises that it may be possible to distinguish variations in shaft torque which can be attributed to bearing wear from those variations in shaft torque caused by one or more other factors. These variations in shaft torque may cause sudden deceleration of the rotation and/or an increase in motor power required to maintain rotation.

It will be appreciated that operational characteristics of a pump motor which could help to recognise variation in shaft torque typically relate to an indirect indication of aspects of the rotating assembly motion. Varying bearing rolling friction, as might be associated with bearing wear, will cause fluctuations in the rotational movement of a shaft or motor rotor, which are then translated to operation of the pump. The rotational fluctuations relate to changes in the operation of, for example, the motor driving a shaft or pump, as it is adjusted to compensate for "sticking" caused by bearing wear.

The first aspect recognises that appropriate analysis of rotational speed and motor power over time can reveal features which may be characteristic of bearing wear.

According to some embodiments, the signal feature is predefined and represents a known bearing wear condition. Accordingly, simple detection of a feature in a signal may be indicative of bearing wear.

According to some embodiments, the apparatus may include a user alarm configured to be triggered on identification of the one or more signal feature of each signal which is indicative of bearing wear. That alarm condition may be relayed to a user or to a pump control unit. The alarm may comprise a visual or audible alarm. The alarm may trigger further action, for example, safe pump shutdown.

The signals indicative of characteristics of rotating assembly rotation comprise a signal indicative of rotational speed.

Accordingly, the rotational speed of a shaft or pump being driven by a motor shaft may provide a mechanism to identify the frictional or sticking impact that bearing wear may have upon operation of a pump.

According to some embodiments, the signal feature of the signal indicative of rotational speed which is indicative of bearing wear comprises: rate of deceleration exceeding a predetermined threshold. Accordingly, the sticking associated with bearing or bearing cage wear may cause unexpected deceleration of the pump impeller or rotor or shaft.

According to some embodiments, the signal feature of the signal indicative of rotational speed which is indicative of bearing wear comprises: identification of increased deceleration compared to historic deceleration events. According to some embodiments, the signal feature of the signal indicative of rotational speed which is indicative of bearing wear comprises: identification of increased deceleration compared to known or scheduled deceleration events. According to some embodiments, the signal feature of the signal indicative of rotational speed which is indicative of bearing wear comprises: identification of increased deceleration compared a predetermined deceleration threshold.

The signals indicative of characteristics of rotating assembly rotation also comprises a signal indicative of motor power. An increased power demand can be indicative of bearing wear, as power is increased to overcome sticking and friction.

According to some embodiments, the signal feature of the signal indicative of motor power which is indicative of bearing wear comprises: motor power being at a maximum for a predetermined time period.

According to some embodiments, the input reception circuitry is configured to receive a signal indicative of an operational characteristic of the vacuum pump, and the signal feature of the signal indicative of motor power which is indicative of bearing wear comprises: motor power being at a maximum despite the operational characteristic signal indicating that the vacuum pump is unlikely to require maximum motor power. Increased, or maximum motor power can be expected at various points of usual pump operation. In the case of a vacuum pump, for example, maximum power may be required on initial start up of the pump, and in the case of increased gas load. By providing the bearing wear apparatus with an indication of the operational conditions of the pump, it is possible to prevent false triggering of a bearing wear alert.

The signals indicative of characteristics of rotating assembly rotation comprise both a signal indicative of rotational speed and a signal indicative of motor power.

Although either one of rotational speed or motor power when measured over a time period may provide an indication of bearing wear, both are used, allowing for a more accurate fault diagnosis.

According to some embodiments, a bearing wear fault diagnostic is associated with the identification of the one or more signal feature of each signal which is indicative of bearing wear. Accordingly, the nature of a bearing wear fault may be identifiable from the signals being analysed.

According to some embodiments the bearing wear monitoring apparatus is responsive to determining that the rate of deceleration exceeds the predetermined threshold to monitor power during a time period following said detected deceleration, the bearing wear fault diagnostic being responsive to an indication that said motor power monitored during said time period has exceeded a predetermined threshold to indicate bearing wear.

**In** some embodiments, the bearing wear monitoring apparatus may be responsive to detecting the rate of deceleration exceeding a threshold to monitor power consumed. As noted previously both deceleration and power are both indicative of bearing wear and deceleration is generally seen before an increase in power. Thus, monitoring power following a sudden deceleration may provide further evidence of bearing wear and enable a more reliable fault diagnosis.

A second aspect provides a vacuum pump apparatus comprising a bearing wear monitoring apparatus according to the first aspect.

A third aspect provides a method of monitoring wear of bearings of a vacuum pump having an electric motor comprising a rotating assembly, the method comprising:
receiving signals indicative of characteristics of rotating assembly rotation, the signals indicative of characteristics of rotating assembly rotation comprising a signal indicative of rotational speed and a signal indicative of motor power; and analysing the characteristics of rotating assembly rotation over time to identify one or more signal feature of each signal which is indicative of bearing wear.

**In** some embodiments, the one or more signal feature is predefined and represents a known bearing wear condition.

**In** some embodiments, the method comprises triggering a user alarm on identification of the one or more signal feature of each signal which is indicative of bearing wear.

In some embodiments, the signal feature of the signal indicative of rotational speed which is indicative of bearing wear comprises: rate of deceleration exceeding a predetermined threshold.

In some embodiments, the method comprises: identifying increased deceleration compared to historic deceleration events.

The signals indicative of characteristics of rotating assembly rotation comprise a signal indicative of motor power, and the method comprises analysing motor power over time to identify the one or more signal feature of that signal which is indicative of bearing wear.

In some embodiments, the signal feature of the signal indicative of motor power which is indicative of bearing wear comprises: motor power being at a maximum for a predetermined time period.

In some embodiments, the method comprises receiving a signal indicative of an operational characteristic of the vacuum pump, and the signal feature of the signal indicative of motor power which is indicative of bearing wear comprises: motor power being at a maximum despite the operational characteristic signal indicating that the vacuum pump is unlikely to require maximum motor power.

In some embodiments, the signal indicative of rotational speed comprises an indication of variation of motor phase current over time, and the method comprises transforming the time-based signal into a frequency-based signal; and analysing the frequency-based signal to identify the one or more signal feature indicative of bearing wear.

In some embodiments, said one or more signal feature of each signal which is indicative of bearing wear comprises both rate of deceleration exceeding a predetermined threshold and motor power being at a maximum for a predetermined time period.

In some embodiments the method comprises in response to determining that the rate of deceleration exceeds the predetermined threshold monitoring power during a time period following said detected deceleration; and

In response to an indication that said motor power monitored during said time period has exceeded a predetermined threshold outputting an indicator indicating bearing wear.

In some embodiments, a bearing wear fault diagnostic is associated with the identification of the one or more signal feature of each signal which is indicative of bearing wear.

A fourth aspect provides a computer program comprising computer readable instructions which, when executed by a processor, are configured to cause a device to perform a method of the third aspect.

According to some related examples, the signal indicative of rotational speed comprises an indication of rotation period, and wherein the bearing wear monitoring circuitry is configured to analyse consecutive rotation periods to identify the one or more signal feature indicative of bearing wear. The rotation period may comprise time to complete one revolution or may, in some related examples, comprise time to complete a part revolution. Accordingly, if a shaft or rotor is getting stuck as a result of bearing wear, it would be expected to cause microfluctuations in rotational period. Analysis of adjacent consecutive rotation periods to determine time period fluctuation or variability can allow for identification of friction of the type typically caused by bearing wear.

According to some related examples, the rotation period comprises a time to complete a known angular rotation. That angular rotation may, for example, comprise: a single complete rotation, a partial rotation, or a number of consecutive rotations.

According to some related examples, the signal feature of the signal indicative of rotational speed which is indicative of bearing wear comprises: variability in the rotation period exceeding a predetermined threshold.

According to some related examples, the signal feature of the signal indicative of rotational speed which is indicative of bearing wear comprises: identification of increased variability on the rotation period compared to historic variation in the rotation period. Accordingly, historic analysis of a received signal in which no bearing wear is determined to be present may be stored in order that comparison may be made.

According to some related examples, the signal indicative of rotational speed comprises an indication of variation of motor phase current over time, and wherein the bearing wear monitoring circuitry is configured to transform the time-based signal into a frequency-based signal; and analyse the frequency-based signal to identify the one or more signal feature indicative of bearing wear. Since the pump operates to try and maintain a constant rotational speed, variation in current being supplied to the motor can provide an indication of variation in rotation of the rotor/shaft/pump forming the rotating assembly. Transforming the time based signal to a frequency based signal can allow for easier identification of features in the signal which may indicate bearing wear.

It will be appreciated that one operational characteristic of a pump motor which could help to recognise variation in shaft torque is that of current supplied to a pump motor, given a target of maintaining a rotational speed. Varying bearing rolling friction, as might be associated with bearing wear, will cause fluctuations in current, as it is adjusted to compensate for "sticking".

Typically an indication of phase current is reported to a user or system controller via a pump 'power' reading which is refreshed & reported approx. every 1 to 2 seconds. This is effectively a 'system power' the time-averaged value obscures the microvariations in current which might be associated with fluctuations in shaft torque due to bearing wear and it makes it difficult to isolate increased friction resulting from effects of bearing wear from increased friction or torque due to other factors. As a result, pump 'power' is not a good indicator of bearing wear.

By avoiding an averaged current signal and instead looking at microfluctuations, it is possible to identify features associated with bearing wear.

According to some related examples, the signal feature of the signal indicative of rotational speed which is indicative of bearing wear comprises: at least one signal peak occurring at a predefined frequency or in a predefined frequency range in the frequency-based signal. Bearing wear may typically occur in a given frequency region.

According to some related examples, the signal feature of the signal indicative of rotational speed which is indicative of bearing wear comprises: a signal peak passing a predefined threshold amplitude in the frequency-based signal. Accordingly, unexpectedly large peaks in the frequency-based signal, even at frequencies where a peak may usually be expected, may be indicative of bearing wear.

According to some related examples, the signal feature of the signal indicative of rotational speed which is indicative of bearing wear comprises: identification of at least one new signal peak in the frequency-based signal compared to historic patterns in the frequency-based signal. Accordingly, emergence of a new frequency feature compared to historic frequency analysis of a signal may indicate bearing wear.

**In** some related examples, the signal indicative of rotational speed comprises an indication of rotation period, and the method comprises analysing consecutive rotation periods to identify the one or more signal feature indicative of bearing wear.

In some related examples, the method comprises identifying increased variability in the rotation period compared to historic variation in the rotation period.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function. Where a feature is described as functional logic, it will be appreciated that the logic may be circuitry configured to perform the function.

### BRIEF DESCRIPTION OF THE DRAWINGS

Embodiments of the present invention will now be described further, with reference to the accompanying drawings, in which:
Figure 1 illustrates schematically some main components of a vacuum pump apparatus incorporating a bearing wear monitoring device in accordance with various aspects and approaches described;
Figure 2 is a schematic representation of a signal to be monitored by a bearing wear monitoring device such as that shown in Figure 1;
Figure 3 is a schematic representation of an alternative signal to be monitored by a bearing wear monitoring device such as that shown in Figure 1; and
Figure 4 is a schematic representation of a further signal to be monitored by a bearing wear monitoring device such as that shown in Figure 1.

### DESCRIPTION OF THE EMBODIMENTS

Before discussing the embodiments in any more detail, first an overview will be provided.

A pump system will typically comprise: a pump including a stator and a rotating assembly part; an inverter and a pump controller. Pumps of interest may include a vacuum pump, such as a turbo pump or multi-stage positive displacement pump, for pumping gas from a semiconductor tool or the like. However, it will be appreciated that the issues associated with operation of a pump are not limited to a particular type of pump mechanism. As described above, a pump typically comprises: an electric motor having a stator and a rotor. The rotor will typically be mounted such that bearings ensure smooth rotation of a shaft associated with the rotor. The shaft may drive a pump impeller. The motor rotor, shaft and impeller may together comprise a rotating assembly. Bearing wear, for example, from spalling of associated raceways or damage to a bearing cage, can cause an increase in rolling frictional forces associated with the bearing, and may consequently impact upon operation of the pump and pump system. As a shaft is driven by a motor, the variations in rolling frictional forces may be measurable as microvariations in various operational characteristics of the motor. For example, friction changes due to bearing bear can cause microvariations in phase current and/or rotational speed. In order to detect or monitor such micro variations a measurement approach beyond a time averaged value typically supplied by a user interface or system controller is required.

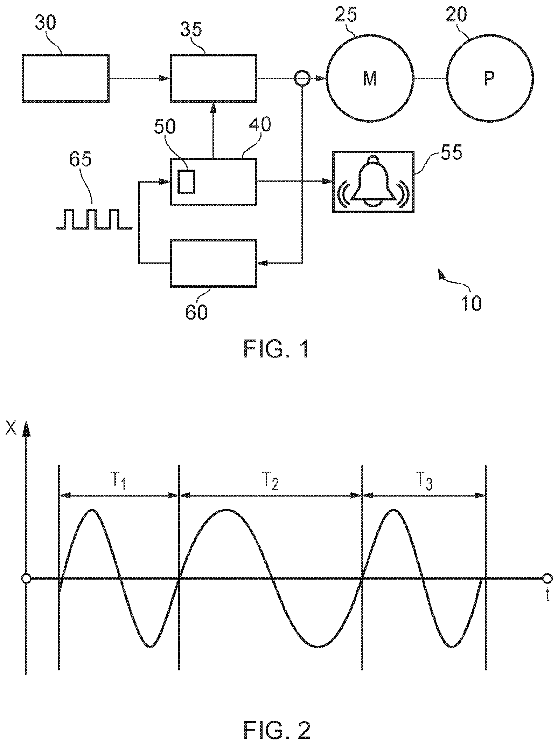

A pump system in accordance with various arrangements will now be described. As described herein, a pump system 10 is configured to perform a self-diagnostic function in relation to bearing wear. Figure 1 illustrates schematically some main components of a vacuum pump system 10 incorporating a bearing wear monitoring device in accordance with various aspects and approaches described.

The pump system 10 comprises a pump 20 driven by motor 25, a power source 30 and associated power supply electronics 35, and a control unit 40. The pump 20 in the described arrangement is a vacuum pump, such as a multi-stage positive displacement pump, for pumping gas from a semiconductor tool or the like. It will, however, be appreciated that the approaches described in relation to this arrangement are not limited to a particular type of pump mechanism.

The electric motor 30 comprises a stator and a rotor. The rotor is connected to a shaft which drives operation of pump 20. The rotor and shaft are associated with bearings, to allow smooth rotation of the shaft and transfer of the rotation to the pump. The control unit 40 is configured to be in communication with the pump power supply electronics 35 to control operation of the motor 25 driving the pump 20. The control unit also provides a human machine interface (HMI) to facilitate control of the pump 20. The control unit 40 comprises control circuitry and control software configured to process signals received from various components of the pump system 10 and one or more sensors associated with components of the pump system. The control unit is configured to process those input signals using control circuitry and to generate one or more outputs which can be communicated to one or more components of the pump system and control operation of the pump 20.

The pump system 10 shown in Figure 1 includes bearing wear monitoring apparatus 50. Although shown as part of control unit 40, it will be appreciated that some implementations may provide separate bearing wear monitoring apparatus which may be configured to communicate with control unit 40. The bearing wear monitoring apparatus 50 includes bearing wear logic or circuitry and processing ability and is also configured to process signals received from various components of the pump system 10 and one or more sensors associated with components of the pump system. The bearing wear monitoring apparatus is configured to process those input signals using control circuitry and to generate one or more outputs which can be communicated to the control unit 40 and/or one or more components of the pump system and therefore directly, or indirectly, influence operation of the pump 20. The bearing wear monitoring apparatus may be associated with operation of bearing wear alarm 55. Bearing wear alarm 55 may be configured to provide a visual or audible alert to a system user in the event that bearing wear monitoring apparatus 50 detects possible bearing wear.

In the arrangement shown in Figure 1, bearing wear monitoring apparatus is in communication with a rotor position measurement device 60. That rotor position measurement device 60 may be configured to measure or estimate rotational movement of the shaft driven by motor 25. Rotor position measurement device 60 may effect rotor position measurement using, for example, one or more hall switches, an encoder, or other position measurement or estimation device. An example signal 65 generated by rotor position measurement or estimation device 60 is shown, and takes the form of one or more pulses generated per revolution of the rotor or shaft. Bearing wear monitoring apparatus shown in Figure 1 is also in communication with power supply electronics 35, and control unit 40.

Various approaches according to which bearing wear monitoring apparatus 50 may be configured to provide an assessment of bearing wear are discussed in detail. Some approaches described may be based upon taking multiple measurements per shaft revolution, some approaches may be based upon measurements taken over a longer time period, for example, a time period which encompasses several shaft revolutions.

Four general approaches are discussed in detail. It will be appreciated that the details of the general approaches may be combined as appropriate to provide hybrid approaches which may also provide mechanisms to assess bearing wear. Two of the described general approaches rely on very rapid measurements (micro- to milliseconds). Two of the described general approaches rely on longer-term measurements (~seconds).

According to one general related approach, bearing wear logic may be configured to record or monitor motor phase current provided to the motor 25 by power source electronics 35 in order to try and provide a constant rotational speed. The bearing wear monitoring apparatus is configured to perform a transformation of the recorded or monitored motor phase current into the frequency domain. The motor phase current may be measured or monitored for each shaft rotation, or part rotation (once per rotation equates to 1ms measurements at a 1kHz shaft speed), or for a small number of shaft rotations, for example, 5 to 10 rotations which equates to 5 to 10ms at a 1kHz shaft speed). Analysis in the frequency domain can allow bearing wear logic to identify components at characteristic bearing fault frequencies. Those frequencies may be predetermined based upon analysis of pumps having bearing wear failure modes, or may comprise identified "new" frequency features compared to a historic frequency analysis of pump operation.

According to one general related approach, bearing wear logic or circuitry provided as part of bearing wear monitoring apparatus 50 may be configured to measure or monitor time taken by the shaft to complete a revolution, or some other fixed angular movement. In other words, the bearing wear monitoring apparatus may analyse a signal 65 received from rotor position measurement device 60. The measurement can be repeated across multiple consecutive angular movements. The bearing wear logic may be configured to compare adjacent measured or monitored times. The comparison of times may allow the logic to identify variation in those monitored times indicative of 'snagging' of the bearing due to wear, and the resultant friction, in the bearing components.

An advantage of the two general related approaches described above resides in the fact that the measurement and monitoring occurs at a rate fast enough to be largely insensitive to pump, as opposed to bearing, factors. For example, as described above, for a pump operating at 1 hHz, it would take 10msec to measure 10 consecutive rotations of the shaft. The duration of each of those 10 consecutive revolutions could be compared and assessed to determine bearing wear. Pump factors, such as changing gas load, thermal effects and back pressure changes are unlikely to cause a fluctuation of shaft rotation time or speed over the course of 10ms which could be mistaken for fluctuation caused by bearing wear. In other words, the two general related approaches described provide bearing wear logic which is configured to collect and process operational parameters of a rotor very rapidly in order to eliminate variation caused by macro-effects on a vacuum system 10.

According to one general approach according to an embodiment, bearing wear logic may be configured to measure or monitor pump rotational speed, or shaft rotational speed, and identify instances where rate of change of rotational speed exceeds that associated with expected pump conditions. In other words, the bearing wear monitoring apparatus may be configured to identify a deceleration or acceleration rate, determined from a signal such as 65 from rotor position measurement device 60 and process that signal to identify whether the determined rate exceeds that associated with an allowable and/or expected pump condition, for example, the rate associated with an emergency stop.

According to one general approach according to an embodiment, bearing wear logic may be configured to monitor and/or measure pump power, based on an analysis of power supply signals from power supply electronics 35, and to identify conditions when a preselected threshold maximum power is demanded by a pump control unit 40 at an unexpected time, given known pump operation conditions.

The two general approaches described immediately above may also make use of fast acquisition and processing as described in relation to earlier related approaches, or may be performed at a slower measurement and processing rate. In order to distinguish bearing wear variations in rotation, the general approaches performed at a slower rate may require at least some knowledge of an expected range of pump applications in order to be able to identify times at which rotational speed deceleration or acceleration and/or pump power falls outside expected operational limits. In accordance with the invention, the two general approaches performed at the slower rate are combined, so that both deceleration and power consumed are monitored and used to determine bearing wear. In this regard a sudden deceleration may be indicative of bearing wear but it may also be indicative of a change in pumping conditions. The power consumed immediately or soon after this may provide further information regarding the cause of the deceleration and may be used to in effect confirm or deny the fault diagnosis.

Having described an overview of each of four general approaches, more detail in relation to each approach is provided:

### Phase Current

As described above, some approaches provide bearing wear logic which is configured to monitor and/or measure phase current over very short time periods, for example, 1,2 or more times per shaft revolution, and then perform a transformation of the monitored phase current into the frequency domain. Transforming the current into the frequency domain allows components at certain frequencies to be resolved and identification of those frequencies typically associated with bearing wear. For example, synchronous frequency could be filtered from the frequency-transformed signal and other frequencies of interest, for example, ball-passing frequencies, bearing cage frequency and similar, can be identified, extracted and monitored. Such values can, for example, be tracked through the life of a pump and compared with a predetermined threshold value or compared with previous values to spot bearing wear or bearing related failures. For example, bearing cage frequency (a sub-synchronous frequency) can be a good indicator of certain failure modes and can be a useful parameter to measure and track over time. It will also, of course, be appreciated, that the phase current is typically a rippling current locked to switching frequency, and that each measurement may itself comprise an indication of an averaged value.

### Shaft rotation time

As described above, some approaches provide bearing wear logic which is configured to measure and monitor time to complete a rotation (or half rotation or other fixed angular movement depending on the number of poles in the motor and exact measurement implementation) as a means to monitor bearing wear factors. Rotation time can be monitored and compared with reference values and/or previous values to identify whether localised areas of high friction may be present in the bearing which would suggest signs of wear.

Figure 2 is a schematic representation of a signal to be monitored by a bearing wear monitoring device such as that shown in Figure 1. In particular, Figure 2 illustrates a signal 65 such as one which may be generated by a rotor position measurement device 60. The signal shown is a plot of an estimated value that varies sinusoidally with rotor angle, versus time and variation between adjacent revolutions T₁, T₂, T₃ can be seen. That variation can be analysed by bearing wear monitoring device 50 and inconsistent variation between revolutions due to friction changes, indicative of bearing wear, can be identified.

### Rotor deceleration

As described above, some approaches according to an embodiment provide bearing wear logic which is configured to measure and monitor rotor or pump deceleration rate. If the logic determines that the measured rotor deceleration rate falls outside expected values it may be configured to alert a user, triggers an alarm, or adjust pump rotor operational parameters. For example, different deceleration rates can be established for each pump type in relation to expected operational events, for example: controlled braking, gas venting, gas loads and similar. A predetermined understanding and knowledge of such events can help provide an indication of usual operational deceleration and can help in the selection of an appropriate maximum expected deceleration rate. Once a deceleration threshold has been selected, bearing wear logic may be configured to continuously monitor rotational speed of a pump and, if the deceleration rate exceeds the maximum expected threshold value, trigger identification of a likely fault condition. In accordance with the invention, rather than immediately triggering identification of a likely fault condition detection of the deceleration triggers the monitoring of power consumed and only if this exceeds a threshold value will the fault condition be identified. Once the likely fault condition has been identified an alarm or other similar signal may, in some cases, be triggered to alert a pump user of the fault condition. In some implementations, the bearing wear logic, in combination with pump control logic, may be configured such that a pump may be tripped into a safe fail mode, and operation of the pump stopped. Stopping a pump in a controlled manner without intervention can be advantageous in the case of unattended pumps.

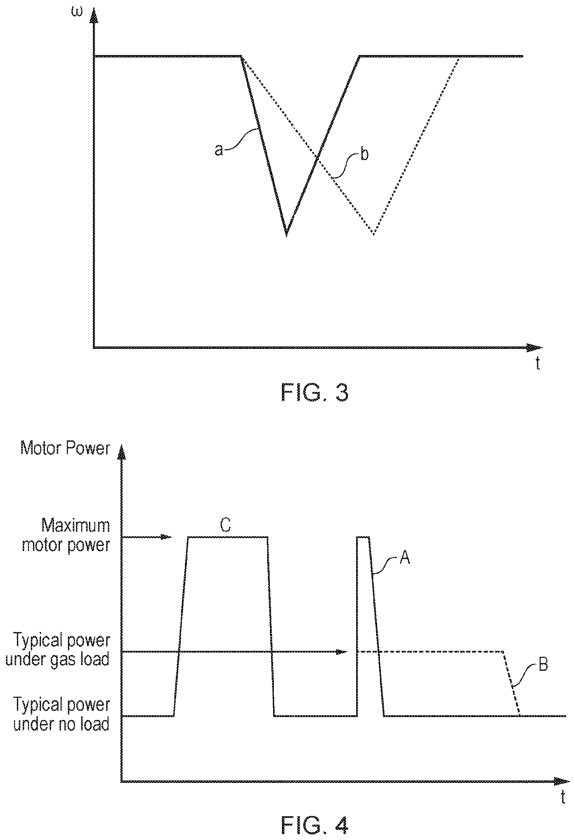

Figure 3 is a schematic representation of an alternative signal to be monitored by a bearing wear monitoring device such as that shown in Figure 1. In particular, Figure 3 shows a signal which may result from monitoring rotational speed of a pump or motor shaft over time. Normal operation of a pump is such that a substantially fixed target rotational speed is maintained. The dashed line (b) illustrates deceleration of a motor shaft, or of the pump, due to expected operational condition, and the solid line (a) illustrates deceleration as might be expected from a bearing fault. The rate of any rotational speed change can be analysed by bearing wear monitoring device 50 and a rate of deceleration which exceeds a selected threshold value, indicative of bearing wear or bearing faults, can be identified.

### Motor Power Demand

As described above, bearing wear logic is provided which is configured to measure and monitor motor power. The bearing wear logic may be configured such that if the power exceeds the maximum expected threshold value, or reaches maximum power, the logic identifies a likely fault condition and triggers an alarm. The bearing wear logic may be configured to monitor additional pump control parameters, to aid identification of a case in which a maximum power request is indicative of a bearing wear issue. In particular, for example, the logic may be configured to ignore, or prevent triggering of an alarm condition, during pump ramp or pump start up where maximum power will be delivered in order to accelerate the pump to full speed. According to some examples, bearing wear logic implementing a motor power demand monitoring regime may link such a regime with monitoring or evaluation of one or more additional pump parameter, for example, rotational speed, deceleration or time since START command received. The motor power demand bearing wear approach may be active if a combination of thresholds or trigger conditions associated with one or more signals are satisfied. Approaches employing bearing wear monitoring of motor power can have particular use in relation to pump applications where gas load is well known and load on the pump due to gas load is below the maximum set in the drive.

Figure 4 is a schematic representation of a further signal to be monitored by a bearing wear monitoring device such as that shown in Figure 1. In particular, Figure 4 illustrates a plot of monitored motor power over time. If the pump is not exposed to a significant gas load, the motor power will typically be substantially constant. Similarly, if the pump is exposed to an increased, but constant, gas load, motor power will be increased, but also substantially constant. A rapid change of gas load, or on initial start up, may be such that maximum motor power is developed and held for a period of time, as shown as peak C in Figure 4. Otherwise, determining that the motor is running at maximum power, in a manner not triggered by an expected change in pump condition, may be indicative of a pump fault. Such a fault condition is illustrated as peak A in Figure 4. Instances of peak or maximum motor power can be analysed by bearing wear monitoring device 50 and unexpected periods at maximum power, indicative, for example, of bearing wear, can be identified.

It will be appreciated that whilst described separately, bearing wear monitoring approaches described above are used in combination. **In** particular, an alarm or system shutdown may be triggered in the event that two or more threshold conditions, each depending on different monitored rotor operation parameters, indicative of likely bearing wear are met.

### REFERENCE SIGNS

- 10: pump system
- 20: pump
- 25: motor
- 30: power source
- 35: power supply electronics
- 40: control unit
- 50: bearing wear monitoring apparatus
- 55: bearing wear alarm
- 60: rotor position measurement device

## Claims

1. A bearing wear monitoring apparatus (50) configured to monitor bearings of a vacuum pump having an electric motor comprising a rotating assembly, the monitoring apparatus comprising:
input reception circuitry configured to receive signals indicative of characteristics of rotating assembly rotation, **characterized in that** the signals indicative of characteristics of rotating assembly rotation comprise a signal indicative of rotational speed and a signal indicative of motor power; and **in that** a bearing wear monitoring circuitry is configured to analyse the characteristics of the rotating assembly rotation over time to identify one or more signal feature of each signal which is indicative of bearing wear.

2. A bearing wear monitoring apparatus according to claim 1, wherein the one or more signal feature is predefined and represents a known bearing wear condition.

3. A bearing wear monitoring apparatus according to claim 1 or claim 2, comprising: a user alarm (55) configured to be triggered on identification of the one or more signal feature of each signal which is indicative of bearing wear.

4. A bearing wear monitoring apparatus according to any preceding claim, wherein the signal feature of the signal indicative of rotational speed which is indicative of bearing wear comprises: rate of deceleration exceeding a predetermined threshold.

5. A bearing wear monitoring apparatus according to any preceding claim, wherein the signal feature of the signal indicative of rotational speed which is indicative of bearing wear comprises: identification of increased deceleration compared to historic deceleration events.

6. A bearing wear monitoring apparatus according to any preceding claim, wherein the signal feature of the signal indicative of motor power which is indicative of bearing wear comprises: motor power being at a maximum for a predetermined time period.

7. A bearing wear monitoring apparatus according to any preceding claim, wherein the signal feature of the signal indicative of motor power which is indicative of bearing wear comprises: motor power being at a maximum despite the operational characteristic signal indicating that the vacuum pump is unlikely to require maximum motor power.

8. A bearing wear monitoring apparatus according to any preceding claim, wherein a bearing wear fault diagnostic is associated with the identification of the one or more signal feature of each signal which is indicative of bearing wear.

9. A bearing wear monitoring apparatus according to claim 8 when dependent on claim 4, the bearing wear monitoring apparatus being responsive to determining that the rate of deceleration exceeds the predetermined threshold to monitor power during a time period following said detected deceleration, the bearing wear fault diagnostic being responsive to an indication that said motor power monitored during said time period has exceeded a predetermined threshold to indicate bearing wear.

10. A vacuum pump apparatus comprising a bearing wear monitoring apparatus as claimed in any one of claims 1 to 9.

11. A method of monitoring wear of bearings of a vacuum pump having an electric motor comprising a rotating assembly, the method comprising:
receiving signals indicative of characteristics of rotating assembly rotation, **characterized in that** the signals indicative of characteristics of rotating assembly rotation comprise a signal indicative of rotational speed and a signal indicative of motor power; and **in that** it analyses the characteristics of the rotating assembly rotation over time to identify one or more signal feature of each signal indicative of bearing wear.

12. A method according to claim 11, said method comprising in response to determining that a rate of deceleration exceeds a predetermined threshold monitoring power during a time period following said detected deceleration, and in response to an indication that said motor power monitored during said time period has exceeded a predetermined threshold generating a bearing wear fault diagnostic indicating bearing wear.

13. A computer program comprising computer readable instructions which, when executed by a processor, are configured to cause a bearing wear monitoring apparatus according to any of the claims 1 to 9 to perform a method according to claim 11 or 12.

## Patentansprüche

1. Lagerverschleißüberwachungsvorrichtung (50), dazu konfiguriert, Lager einer Vakuumpumpe mit einem eine rotierende Anordnung umfassenden Elektromotor zu überwachen, wobei die Überwachungsvorrichtung Folgendes umfasst:
eine Eingangsempfangsschaltung, dazu konfiguriert, Signale, die für Eigenschaften der Rotation einer rotierenden Anordnung bezeichnend sind, zu empfangen, **dadurch gekennzeichnet, dass** die für Eigenschaften der Rotation einer rotierenden Anordnung bezeichnenden Signale ein für eine Drehzahl bezeichnendes Signal und ein für eine Motorleistung bezeichnendes Signal umfassen; und dadurch, dass eine Lagerüberwachungsschaltung dazu konfiguriert ist, die Eigenschaften der Rotation der rotierenden Anordnung im Laufe der Zeit zu analysieren, um ein oder mehrere Signalmerkmale jedes Signals, das für Lagerverschleiß bezeichnend sind, zu identifizieren.

2. Lagerverschleißüberwachungsvorrichtung nach Anspruch 1, wobei das eine oder mehrere Signalmerkmale vordefiniert sind und eine bekannte Lagerverschleißbedingung repräsentieren.

3. Lagerverschleißüberwachungsvorrichtung nach Anspruch 1 oder Anspruch 2, umfassend: einen Benutzeralarm (55), dazu konfiguriert, bei Identifikation des einen oder mehrerer Signalmerkmale jedes Signals, das für Lagerverschleiß bezeichnend ist, ausgelöst zu werden.

4. Lagerverschleißüberwachungsvorrichtung nach einem der vorhergehenden Ansprüche, wobei das Signalmerkmal des Signals, das für eine Drehzahl bezeichnend ist, die für Lagerverschleiß bezeichnend ist, Folgendes umfasst: das Überschreiten eines vorbestimmten Schwellenwerts durch die Verlangsamungsrate.

5. Lagerverschleißüberwachungsvorrichtung nach einem der vorhergehenden Ansprüche, wobei das Signalmerkmal des Signals, das für eine Drehzahl bezeichnend ist, die für Lagerverschleiß bezeichnend ist, Folgendes umfasst: die Identifikation einer erhöhten Verlangsamung im Vergleich zu historischen Verlangsamungsereignissen.

6. Lagerverschleißüberwachungsvorrichtung nach einem der vorhergehenden Ansprüche, wobei das Signalmerkmal des Signals, das für eine Motorleistung bezeichnend ist, die für Lagerverschleiß bezeichnend ist, Folgendes umfasst: eine Motorleistung, die für einen vorbestimmten Zeitraum auf einem Maximum ist.

7. Lagerverschleißüberwachungsvorrichtung nach einem der vorhergehenden Ansprüche, wobei das Signalmerkmal des Signals, das für eine Motorleistung bezeichnend ist, die für Lagerverschleiß bezeichnend ist, Folgendes umfasst: eine Motorleistung, die auf einem Maximum ist, obwohl das Betriebseigenschaftssignal angibt, dass ein Anfordern maximaler Motorleistung durch die Vakuumpumpe unwahrscheinlich ist.

8. Lagerverschleißüberwachungsvorrichtung nach einem der vorhergehenden Ansprüche, wobei eine Lagerverschleißfehlerdiagnose der Identifikation des einen oder mehrerer Signalmerkmale jedes Signals, das für Lagerverschleiß bezeichnend ist, zugeordnet ist.

9. Lagerverschleißüberwachungsvorrichtung nach Anspruch 8, wenn abhängig von Anspruch 4, wobei die Lagerverschleißüberwachungsvorrichtung auf die Feststellung reagiert, dass die Verlangsamungsrate den vorbestimmten Schwellenwert überschreitet, indem sie während eines auf die erkannte Verlangsamung folgenden Zeitraums die Leistung überwacht, wobei die Lagerverschleißfehlerdiagnose auf eine Angabe reagiert, gemäß der die während des Zeitraums überwachte Motorleistung einen vorbestimmten Schwellenwert überschritten hat, indem sie Lagerverschleiß angibt.

10. Vakuumpumpenvorrichtung, umfassend eine Lagerverschleißüberwachungsvorrichtung nach einem der Ansprüche 1 bis 9.

11. Verfahren zum Überwachen des Verschleißes von Lagern einer Vakuumpumpe, die einen eine rotierende Anordnung umfassenden Elektromotor aufweist, wobei das Verfahren Folgendes umfasst:
Empfangen von Signalen, die für Eigenschaften der Rotation einer rotierenden Anordnung bezeichnend sind, **dadurch gekennzeichnet, dass** die für Eigenschaften der Rotation einer rotierenden Anordnung bezeichnenden Signale ein für eine Drehzahl bezeichnendes Signal und ein für eine Motorleistung bezeichnendes Signal umfassen; und dadurch, dass es die Eigenschaften der Rotation der rotierenden Anordnung im Laufe der Zeit analysiert, um ein oder mehrere Signalmerkmale jedes Signals zu identifizieren, das für Lagerverschleiß bezeichnend ist.

12. Verfahren nach Anspruch 11, wobei das Verfahren in Reaktion auf die Feststellung, dass eine Verlangsamungsrate einen vorbestimmten Schwellenwert überschreitet, umfasst, die Leistung während eines auf die erkannte Verlangsamung folgenden Zeitraums zu überwachen, und in Reaktion auf eine Angabe, gemäß der die während des Zeitraums überwachte Motorleistung einen vorbestimmten Schwellenwert überschritten hat, eine Lagerverschleißfehlerdiagnose zu erzeugen, die Lagerverschleiß angibt.

13. Computerprogramm, umfassend computerlesbare Anweisungen, die, wenn sie von einem Prozessor ausgeführt werden, dazu konfiguriert sind, eine Lagerverschleißüberwachungsvorrichtung nach einem der Ansprüche 1 bis 9 zu veranlassen, ein Verfahren nach Anspruch 11 oder 12 auszuführen.

## Revendications

1. Appareil (50) de surveillance d'usure de roulement, configuré pour surveiller des roulements d'une pompe à vide ayant un moteur électrique comprenant un ensemble rotatif, l'appareil de surveillance comprenant :
un circuit de réception d'entrée configurée pour recevoir des signaux indicatifs de caractéristiques de rotation d'ensemble rotatif, **caractérisé en ce que** les signaux indicatifs de caractéristiques de rotation d'ensemble rotatif comprennent un signal indicatif de vitesse de rotation et un signal indicatif de puissance de moteur ; et **en ce qu'**un circuit de surveillance d'usure de roulement est configurée pour analyser les caractéristiques de rotation d'ensemble rotatif au fil du temps afin d'identifier une ou plusieurs particularités de signal de chaque signal qui sont indicatives d'usure de roulement.

2. Appareil de surveillance d'usure de roulement selon la revendication 1, dans lequel les une ou plusieurs particularités de signal sont prédéfinies et représentent un état d'usure de roulement connu.

3. Appareil de surveillance d'usure de roulement selon la revendication 1 ou la revendication 2, comprenant : une alarme utilisateur (55) configurée pour être déclenchée sur identification des une ou plusieurs particularités de signal de chaque signal qui sont indicatives d'usure de roulement.

4. Appareil de surveillance d'usure de roulement selon l'une quelconque des revendications précédentes, dans lequel la particularité de signal du signal indicatif de vitesse de rotation, qui est indicative d'usure de roulement, comprend : un taux de décélération dépassant un seuil prédéterminé.

5. Appareil de surveillance d'usure de roulement selon l'une quelconque des revendications précédentes, dans lequel la particularité de signal du signal indicatif de vitesse de rotation, qui est indicative d'usure de roulement, comprend : l'identification d'une décélération accrue en comparaison à des événements de décélération historiques.

6. Appareil de surveillance d'usure de roulement selon l'une quelconque des revendications précédentes, dans lequel la particularité de signal du signal indicatif de puissance de moteur, qui est indicative d'usure de roulement, comprend : le fait que la puissance de moteur est à un maximum pendant une période de temps prédéterminée.

7. Appareil de surveillance d'usure de roulement selon l'une quelconque des revendications précédentes, dans lequel la particularité de signal du signal indicatif de puissance de moteur, qui est indicative d'usure de roulement, comprend : le fait qu'une puissance de moteur est à son maximum, bien que le signal caractéristique de fonctionnement indique que la pompe à vide est peu susceptible de nécessiter une puissance de moteur maximale.

8. Appareil de surveillance d'usure de roulement selon l'une quelconque des revendications précédentes, dans lequel un diagnostic de défaut d'usure de roulement est associé à l'identification des une ou plusieurs particularités de signal de chaque signal qui sont indicatives d'usure de roulement.

9. Appareil de surveillance d'usure de roulement selon la revendication 8 lorsqu'elle dépend de la revendication 4, l'appareil de surveillance d'usure de roulement étant réactif à la détermination que le taux de décélération dépasse le seuil prédéterminé afin de surveiller la puissance pendant une période de temps suivant la décélération détectée, le diagnostic de défaut d'usure de roulement étant réactif à une indication que ladite puissance de moteur surveillée durant ladite période de temps a dépassé un seuil prédéterminé pour indiquer une usure de roulement.

10. Appareil de pompe à vide comprenant un dispositif de surveillance d'usure de roulement selon l'une quelconque des revendications 1 à 9.

11. Procédé de surveillance d'usure de roulements d'une pompe à vide ayant un moteur électrique comprenant un ensemble rotatif, le procédé comprenant :
la réception de signaux indicatifs de caractéristiques de rotation d'ensemble rotatif, **caractérisé en ce que** les signaux indicatifs de caractéristiques de rotation d'ensemble rotatif comprennent un signal indicatif de vitesse de rotation et un signal indicatif de puissance de moteur ; et **en ce qu'**il analyse les caractéristiques de rotation d'ensemble rotatif au fil du temps pour identifier une ou plusieurs particularités de signal de chaque signal indicatives d'usure de roulement.

12. Procédé selon la revendication 11, ledit procédé comprenant, en réponse à la détermination qu'un taux de décélération dépasse un seuil prédéterminé, la surveillance de la puissance pendant une période de temps suivant ladite décélération détectée, et en réponse à une indication que ladite puissance de moteur surveillée pendant ladite période de temps a dépassé un seuil prédéterminé, la génération d'un diagnostic de défaut d'usure de roulement indiquant une usure de roulement.

13. Programme d'ordinateur comprenant des instructions lisibles par ordinateur qui, lorsqu'elles sont exécutées par un processeur, sont configurées pour amener un appareil de surveillance d'usure de roulement selon l'une quelconque des revendications 1 à 9 à réaliser un procédé selon la revendication 11 ou 12.
